# EUROPÄISCHE PATENTANMELDUNG

(11) **EP 1 667 069 A1**
(43) Veröffentlichungstag der Anmeldung: **07.06.2006**
(21) Anmeldenummer: 05000682.4
(22) Anmeldetag: 14.01.2005
(51) Int. Cl.: G06T 15/40, G01J 5/00

(54) **Verfahren zur Bestimmung der Verteilung der lokalen Strahlungsintensität in einem semitransparenten Medium**

(30) Priorität: 03.12.2004 DE 102004058548
(71) Anmelder: Schott AG, 55122 Mainz (DE)
(72) Erfinder: Fainberg, Jakob, Dr., 91058 Erlangen (DE)
(74) Vertreter: Herden, Andreas F.

(57) **Zusammenfassung**

Um ein signifikant schnelleres Verfahren mit gleichzeitig geringerem Speicherbedarf zur Bestimmung der Verteilung der lokalen Strahlungsintensität in einem semitransparenten, mindestens eine Grenzfläche aufweisenden Medium zu entwickeln, sieht die Erfindung ein Ray-Tracing-Verfahren vor, mit den Schritten
der Festlegung einer Anzahl von Stützpunkten, die numerisch darstellbar sind und die Grenzfläche des Mediums repräsentieren,
der Verfolgung von Strahlen, ausgehend von den Stützpunkten auf der Grenzfläche, entlang ausgewählter diskreter Raumrichtungen unter Berücksichtigung zumindest einer Reflexion an der Grenzfläche,
der Ermittlung der Werte der Strahlungsintensität in den diskreten Raumrichtungen für alle Stützpunkte auf der Grenzfläche durch numerisches Berechnen des Strahlungstransportes unter Nutzung der durch Strahlenverfolgung gefundenen Strahlengänge,
der Speicherung der Werte der Strahlungsintensität in den diskreten Raumrichtungen für alle Stützpunkte auf der Grenzfläche,
der Festlegung einer Anzahl von Stützpunkten, die das Medium repräsentieren,
der Auswahl einer Anzahl diskreter Raumrichtungen,
der Verfolgung von Strahlen, ausgehend von den Stützpunkten im Innern des Mediums, entlang der ausgewählten diskreten Raumrichtungen bis zur Grenzfläche des Mediums,
des Berechnens des Strahlungstransportes unter Verwendung der durch Verfolgung der Strahlen gefundenen Strahlengänge, der Ermittlung des Integrals der an jedem Stützpunkt einfallenden Strahlungsintensität, sowie
der Speicherung der Werte der Strahlungsintensität in den diskreten Raumrichtungen für alle Stützpunkte im Inneren des Mediums.

## Beschreibung

Die Erfindung betrifft allgemein den Strahlungstransport in semitransparenten Medien und insbesondere ein Verfahren sowie eine Vorrichtung zur Bestimmung der Verteilung der lokalen Strahlungsintensität in einem mindestens eine Grenzfläche aufweisenden semitransparentem Medium.

Viele wichtige Eigenschaften, wie z.B. die Viskosität, die elektrische Leitfähigkeit, das spezifische Volumen oder das chemische Reaktionsvermögen eines Materials oder Mediums werden von der Temperatur bestimmt. Gerade auch im Bereich der Erschmelzung, Läuterung und/oder der formgebenden Bearbeitung von Glas kommt der Einhaltung bestimmter Temperaturen, häufig auch zeitabhängig, grosse Bedeutung zu. Durch die jeweils herrschenden Temperaturen werden unmittelbar die stofflichen und formbezogenen Eigenschaften massiv beinflusst, sowohl im positiven als auch im negativen Sinne. Dabei ist die Einspeisung oder Entnahme von Wärmeenergie, welche in der Regel in Randbereichen der Bearbeitungsvorrichtungen zum Glas hin vorgenommen wird, sowohl durch Heiz- als auch durch Kühlvorrichtungen sehr exakt beeinflussbar; es bleibt dennoch äusserst schwierig, innerhalb des Mediums Glas exakte Angaben über dort herrschende Temperaturverteilungen zu machen. Gerade in einem semitransparenten Medium wie Glas wird die Temperaturverteilung entscheidend durch den Strahlungstransport innerhalb des Mediums mit beeinflusst. Folglich ist die Kenntnis des Einflusses des Strahlungstransportes auf die Temperaturverteilung in einem semitransparenten Medium sehr wichtig und kann gerade bei schwierig zu erschmelzenden Gläsern ein unerwünschtes lokales Kristallisieren und damit hohe Ausschussraten verhindern. Auch bei der heissformgebenden Bearbeitung von Kunststoffen kann derartige Kenntnis von grossem Vorteil sein, um zügige und kostengünstige Bearbeitung zu ermöglichen.

Um den Strahlungstransport zu bestimmen, können beispielsweise Lösungen einer Strahlungstransportgleichung innerhalb des jeweiligen semitransparenten Mediums ermittelt werden. Da die volle Lösung der Strahlungstransportgleichung mit heutigen Rechensystemen nicht in sinnvollen Zeiträumen möglich ist, müssen für praxisrelevante Anwendungsfälle Näherungsverfahren eingesetzt werden, welche häufig eine hinreichend genaue Lösung gestatten.

Ein solches allgemein bekanntes Näherungsverfahren ist das Ray-Tracing-Verfahren, welches auch als das Verfahren der Strahlen- oder Strahlverfolgung bezeichnet wird. Bei diesem Verfahren wird im allgemeinen das Medium durch ein dreidimensionales numerisches Gitter abgebildet und an jedem Stützpunkt dieses numerischen Gitters wird das Integral der einfallenden Strahlungsintensität über den Raumwinkel gebildet. Dazu wird die Verteilung der Strahlung in einem Raumwinkelbereich durch Strahlung in ausgewählten diskreten Richtungen ersetzt. Der Strahlengang wird entlang jeder dieser diskreten Richtungen zu dem jeweils betrachteten Stützpunkt hin verfolgt, wobei auch mehrere Reflexionen des Strahls an der Grenzfläche des Mediums berücksichtigt werden können und häufig berücksichtigt werden müssen, um zu tragfähigen Aussagen zu gelangen. Die Strahlungsintensität wird für jeden Stützpunkt entlang der gefundenen Strahlengänge integriert, um zu der an diesem Stützpunkt angetroffenen gesamten Strahlungsleistung zu gelangen.

Die für das computergestützte Berechnen der Lösungen einer Strahlungstransportgleichung erforderliche Rechenzeit und der erforderliche Speicherbedarf sind bei diesem Verfahren abhängig von i) der Anzahl der Stützpunkte, ii) der Anzahl der diskreten Richtungen im Raum und iii) von der Anzahl der berücksichtigten Reflexionen an der Grenzfläche des Mediums. Diese Berechnung wird typischerweise iterativ durchgeführt, wobei jede Iteration ein bestimmtes reales Zeitintervall mit dem dabei auftretenden Strahlungstransport repräsentiert. Für eine Iteration ergeben sich z.B. bei einem numerischen Gitter mit 200.000 Stützpunkten, bei Betrachtung von 120 diskreten Richtungen und unter Berücksichtigung von drei Reflexionen über 70 Millionen zu berechnender Strahlenverfolgungen, was auch für modernste Rechentechnik einen extrem hohen Bedarf an Speicher und Rechenzeit mit sich bringt.

Die Effizienz des Ray-Tracing-Verfahrens war aus diesen Gründen bisher häufig nicht ausreichend, um auch für grössere Modelle, wie sie für kommerzielle Anwendungen typisch sind, realisieren zu können. Grössere Modelle sind jedoch erforderlich, um immer geringeren Toleranzen in der industriellen Fertigung Rechnung zu tragen.

Die Erfindung hat sich daher die Aufgabe gestellt, ein signifikant schnelleres Verfahren mit vorzugsweise gleichzeitig geringerem Speicherbedarf zur Bestimmung der Verteilung der lokalen Strahlungsintensität in einem semitransparenten Medium, wie beispielsweise Glas oder Kunststoff zu entwickeln.

Diese Aufgabe wird in überraschend einfacher Weise bereits durch ein Verfahren mit den Merkmalen des Anspruchs 1 sowie ein Computerprogrammprodukt mit den Merkmalen des Anspruchs 18 und durch eine Vorrichtung zur Bestimmung der Verteilung der lokalen Strahlungsintensität mit den Merkmalen des Anspruchs 19 gelöst.

Der grosse Vorteil eines Verfahrens mit den Merkmalen des Anspruchs 1 liegt darin, dass Reflexionen an der Grenzfläche nur für Stützpunkte auf der Grenzfläche, nicht aber für Stützpunkte im Innern des Mediums, berücksichtigt werden. Das zahlenmässige Verhältnis zwischen den Stützpunkten auf der Grenzfläche und den Stützpunkten im Innern des Mediums ergibt sich aus der 2-Dimensionalität der Fläche und der 3-Dimensionalität des Volumens. Bei einem angenommenen numerischen Gitter mit einer Anzahl von n Stützpunkten entlang jeder der drei Raumrichtungen ergibt sich näherungsweise ein Verhältnis von n³ zu n², also ein Faktor n, der noch geringfügig von der exakten Gestalt der Grenzfläche beeinflusst werden kann. Für regelmässig verwendete Grössen des numerischen Gitters ist die Anzahl der Stützpunkte auf der Grenzfläche jedoch stets sehr viel kleiner als im Volumen.

Da die für das Berechnen der Lösungen einer Strahlungstransportgleichung erforderliche Rechenzeit und der zugeordnete Speicherbedarf von der Länge des für jeden Stützpunkt betrachteten Strahlenganges abhängt, werden durch das Verfahren Rechenzeit und Speicherbedarf nochmals um einen Faktor proportional zur mittleren Anzahl der berücksichtigten Reflexionen reduziert. Dieser Faktor liegt typischerweise zwischen 2 und 6.

Die Aufgabe wird ebenfalls durch ein Verfahren gemäss Anspruch 2, insbesondere in Verbindung mit Anspruch 1, gelöst. Erfindungsgemäss kommt dabei in Verbindung mit dem Oberbegriff des Anspruchs 2 ein Verfahren zum Einsatz, das für zumindest 2 Iterationen, jeweils für alle Stützpunkte, durchgeführt wird, wobei sich die Anzahl der ausgewählten diskreten Richtungen, entlang derer eine Strahlenverfolgung durchgeführt wird, für zumindest 2 Iterationen unterscheidet.

Gemäss einer bevorzugten Ausführungsform des erfindungsgemässen Verfahrens wird das Verfahren für zumindest m + n Iterationen, jeweils für alle Stützpunkte, durchgeführt, wobei m und n natürliche Zahlen grösser als 0 sind, umfassend die Schritte in den m Iterationen
- einer Strahlenverfolgung für eine Anzahl M ausgewählter diskreter Richtungen, mit M eine natürliche Zahl grösser 0,
- einer Ermittlung des Integrals der an jedem Stützpunkt einfallenden Strahlungsintensität über den gesamten Raumwinkel unter Nutzung der M gefundenen Strahlengänge, sowie
- der Ermittlung von N Verhältnisfaktoren aus dem Verhältnis der Strahlungsintensität in N ausgewählten diskreten Richtungen und N zugehörigen Teilintegralen, wobei N eine natürliche Zahl grösser 0 ist, die N diskreten Richtungen eine Untermenge der M diskreten Richtungen sind, die N Teilintegrale über N Teilraumwinkel ermittelt werden mit den N diskreten Richtungen jeweils im Zentrum der N Teilraumwinkel, und zur Ermittlung der N Teilintegrale die M gefundenen Strahlengänge genutzt werden, und umfassend die Schritte in den n Iterationen
- der Strahlenverfolgung entlang der N ausgewählten diskreten Richtungen und
- der Ermittlung des Integrals über den gesamten Raumwinkel unter Nutzung der in den m Iterationen ermittelten Verhältnisfaktoren.

Der Vorteil dieser Ausführungsform liegt in der Nutzung einer genaueren Information über die Verteilung der Strahlung nach den Richtungen, welche in einer ersten Anzahl von Iterationen ermittelt wird, für eine bestimmte Anzahl weiterer Iterationen, in welchen dann die Betrachtung einer geringeren Anzahl diskreter Raumrichtungen ausreicht. Da die für das Berechnen der Lösungen der Strahlungstransportgleichung erforderliche Rechenzeit und Speicherbedarf von der Anzahl der betrachteten diskreten Richtungen abhängt, werden durch diese Ausführungsform des erfindungsgemässen Verfahrens Rechenzeit und Speicherbedarf nochmals erheblich reduziert.

Gemäss einer besonders bevorzugten Ausführungsform des erfindungsgemässen Verfahrens entspricht die Anzahl der m Iterationen genau einer Iteration, da für diesen Fall Rechenzeit und Speicherbedarf besonders reduziert werden können. Bei dieser Ausführungsform liegt die Reduktion der Rechenzeit und des Speicherbedarfes typischerweise bei einem Faktor von etwa 5.

Eine weitere bevorzugte Ausführungsform sieht vor, dass die M vorstehend erwähnten Richtungen durch dreidimensionale Vektoren in einem rechtwinkligen Koordinatensystem mit Komponenten aus der Menge {-1;-1/2;0;1/2;1} mit mindestens einer Komponente gleich 1 oder -1 gebildet werden. Dies entspricht einer Anzahl von 98 diskreten Richtungen, die sich aus 5³-3³=98 ergeben. Die Wahl dieser diskreten Raumrichtungen ist für die meisten Anwendungen besonders geeignet.

Eine weitere bevorzugte Ausführungsform sieht vor, dass die N Richtungen durch dreidimensionale Vektoren in einem kartesischen Koordinatensystem mit genau einer Komponente gleich 1 oder -1 und den anderen Komponenten gleich 0 gebildet werden.

Eine besonders bevorzugte Auführungsform des erfindungsgemässen Verfahrens sieht ein Verfahren vor, bei welchem Stützpunkte im Innern des Mediums derart gewählt werden, dass diese ein rechtwinkliges und äquidistantes Gitter bilden. Diese Ausführungsform bietet den erheblichen Vorteil, dass die Strahlenverfolgung entlang der diskreten Richtungen für Gruppen von Stützpunkten durchgeführt werden kann. Durch diese Ausführungsform reduziert sich die für das Berechnen der Lösungen einer Strahlungstransportgleichung erforderliche Rechenzeit und zugehöriger Speicherbedarf, und zwar typischerweise proportional zur mittleren Anzahl der Stützpunkte entlang der Strahlengänge. Bei einem numerischen Gitter von z.B. 60x60x60 Stützpunkten ist eine Reduktion an Rechenzeit und Speicherbedarf um den Faktor 30 zu erwarten.

Im Rahmen der Erfindung liegt es ausserdem, die in den Stützpunkten des verwendeten numerischen Gitters einfallende Strahlungsintensität auf ein zweites, überlappendes numerisches Gitter zu interpolieren. Dadurch wird ermöglicht, die von der Wahl des numerischen Gitters abhängigen Vorteile des erfindungsgemässen Verfahrens für ein beliebig wählbares numerisches Gitter zu nutzen.

Eine weitere Ausführungsform des erfindungsgemässen Verfahrens sieht vor, dass die Strahlungsintensitäten an den Stützpunkten aus einer vorgegebenen oder vorbekannten realen Temperaturverteilung des Mediums ermittelt werden und diese als Eingabeparameter für das Verfahren verwendet werden.

Eine weitere Ausführungsform des erfindungsgemässen Verfahrens sieht vor, dass das Verfahren den Schritt der Ermittlung einer Temperaturverteilung des Mediums auf der Grundlage der gefundenen Strahlungsintensitäten an den Stützpunkten umfasst.
Hierdurch wird der Einfluss des Strahlungstransportes auf die Temperaturverteilung im Medium ermittelt und ermöglicht so die Betrachtung eines zeitlichen Verlaufes der Temperaturverteilung innerhalb des Mediums.

Eine weitere Ausführungsform des erfindungsgemässen Verfahrens sieht vor, die zur numerischen Berechnung eines Strahlungstransportes erforderlichen Parameter und die Rechenvorschrift für unterschiedliche Frequenz- oder Wellenlängenbereiche der Strahlung unterschiedlich festzulegen. Hierdurch kann dem unterschiedlichen Verhalten des Strahlungstransportes für unterschiedliche Frequenz- oder Wellenlängenbereiche Rechnung getragen werden.

Die Erfindung umfasst vorteilhaft auch eine Vorrichtung zur Bestimmung der Verteilung der lokalen Strahlungsintensität, vorzugsweise in einem mindestens eine Grenzfläche aufweisenden, semitransparenten Medium, umfassend Einrichtungen, insbesondere zur Durchführung des erfindungsgemässen Verfahrens, vorzugsweise mit einer Einrichtung zur numerischen Darstellung einer Anzahl von Stützpunkten, die das Medium repräsentieren, einer Einrichtung zur numerischen Darstellung einer Anzahl diskreter Raumrichtungen, einer Einrichtung zur numerischen Durchführung einer Strahlenverfolgung, ausgehend von den Stützpunkten, entlang der ausgewählten diskreten Raumrichtungen, sowie einer Einrichtung zur numerischen Berechnung eines Strahlungstransportes auf der Grundlage einer festgelegten Rechenvorschrift und festgelegter Parameter unter Verwendung der durch Verfolgung der Strahlen gefundenen Strahlengänge, einer Einrichtung zur Bestimmung eines Integrals der an jedem Stützpunkt aus den diskreten Raumrichtungen einfallenden Strahlungsintensität auf Grundlage einer festgelegten Rechenvorschrift und festgelegter Parameter.

Die Erfindung soll nachstehend anhand von bevorzugten Ausführungsbeispielen und unter Bezugnahme auf die beigefügten Zeichnungen näher erläutert werden, wobei sich in den Zeichnungen gleiche Bezugszeichen auf gleiche oder ähnliche Merkmale oder Bestandteile beziehen.

Es zeigen
- Figur 1: den Schritt der Strahlenverfolgung für Stützpunkte, welche auf der Grenzfläche eines semitransparenten Mediums liegen, welche exemplarisch für einen solchen Stützpunkt und eine diskrete Richtung dargestellt sind und wobei vier Reflexionen an der Grenzfläche berücksichtigt wurden,
- Figur 2: die Strahlenverfolgung für einen Stützpunkt im Innern eines semitransparenten Mediums, wobei die Strahlenverfolgung an der Grenzfläche des Mediums beginnt,

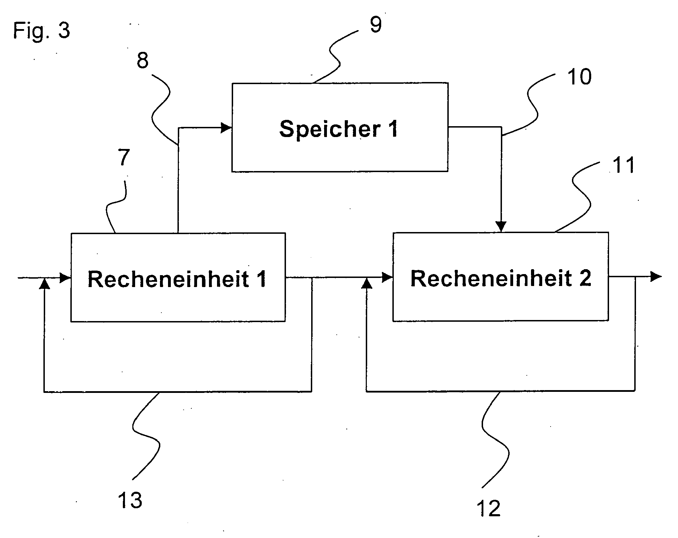

- Figur 3: schematisch den Ablauf der Bestimmung des Strahlungstransportes gemäss dem erfindungsgemässen Verfahren für einen Iterationsschritt somit für ein Zeitintervall,
- Figur 4: bevorzugt gewählte diskrete Raumrichtungen, wobei der Ursprung des durch die Koordinatenachsen x, y und z aufgespannten Koordinatensystems einem Stützpunkt des numerischen Gitters entspricht und die diskreten Richtungen, welche durch Vektoren mit Komponenten aus der Menge {-1;-1/2;0;1/2;1} mit mindestens einer Komponente gleich 1 oder -1 gebildet werden, als gedachte Verbindungen des Koordinatenursprungs mit Schnittpunkten eines Raumgitters dargestellt sind, und
- Figur 5: schematisch den Ablauf der Bestimmung des Strahlungstransportes gemäss einer bevorzugten Ausführungsform des erfindungsgemässen Verfahrens dargestellt, wobei das Verfahren einen Zyklus verwendet, welcher aus 1+n Iterationen gebildet wird.

Die Erfindung wird nachfolgend detaillierter und anhand bevorzugter sowie besonders bevorzugter Ausführungsformen beschrieben.

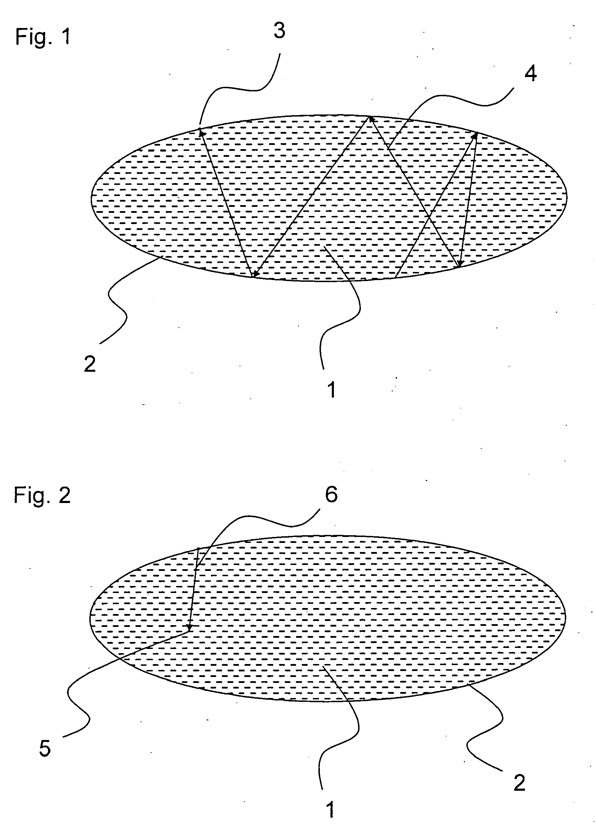

Nachfolgend wird auf Figur 1 bezug genommen, welche den Schritt der Strahlenverfolgung für Stützpunkte, welche auf der Grenzfläche 2 eines semitransparenten Mediums 1 liegen, zeigt.

Diese Stützpunkte sind exemplarisch nur für einen solchen Stützpunkt 3 und eine diskrete Richtung dargestellt und wobei vier Reflexionen 4 an der Grenzfläche berücksichtigt wurden.

In einer ersten Recheneinheit 7 wird für einen Stützpunkt 3 des numerischen Gitters, der sich auf der Grenzfläche 2 des durch das numerische Gitter repräsentierten Mediums 1 befindet, und für eine Anzahl diskreter Raumrichtungen eine Strahlenverfolgung durchgeführt wobei unter Nutzung der gefundenen Strahlengänge die an dem Stützpunkt 3 einfallende Strahlungsintensität ermittelt, wobei bei der Strahlenverfolgung mehrere Reflexionen 4 an der Grenzfläche 2 des durch das numerische Gitter repräsentierten Mediums berücksichtigt werden.

Für den betrachteten Stützpunkt erfolgt eine Speicherung 8 der ermittelten Strahlungsintensität in einem Speicher 9. Dieser Vorgang wird für jeden Stützpunkt des numerischen Gitters, welcher sich auf der Grenzfläche 2 des durch das numerische Gitter repräsentierten Mediums 1 befindet, durchgeführt 13.

In einer zweiten Recheneinheit 11 wird für einen Stützpunkt 5 des numerischen Gitters, der sich im Innern des durch das numerische Gitter repräsentierten Mediums 1 befindet, und für eine Anzahl diskreter Raumrichtungen eine Strahlenverfolgung 6 durchgeführt und unter Nutzung der gefundenen Strahlengänge, sowie unter Nutzung 10 der gespeicherten Werte der Strahlungsintensität für Stützpunkte 3 auf der Grenzfläche 2 des durch das numerische Gitter repräsentierten Mediums 1, die an dem einen Stützpunkt einfallende Strahlungsintensität ermittelt, wobei die Strahlenverfolgung nur bis zum Erreichen der Grenzfläche 2 des durch das numerische Gitter repräsentierten Mediums 1 durchgeführt wird.

Dieser Vorgang wird für jeden Stützpunkt des numerischen Gitters, der sich im Innern des durch das numerische Gitter repräsentierten Mediums befindet, durchgeführt 12.

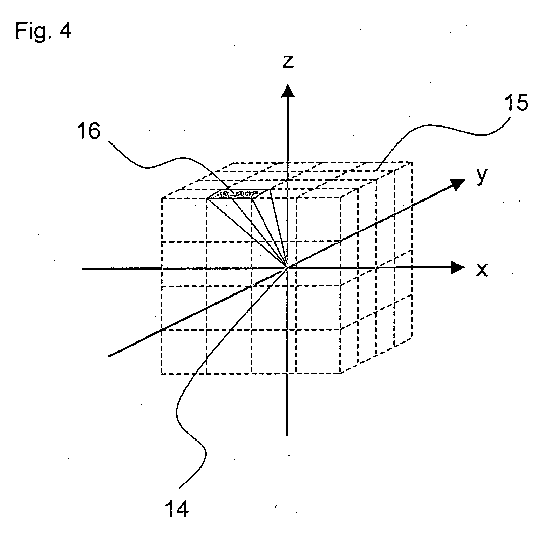

In Figur 4 sind bevorzugt gewählte diskrete Raumrichtungen dargestellt. Der Ursprung 14 des durch die Koordinatenachsen x, y und z aufgespannten Koordinatensystems entspricht einem Stützpunkt des numerischen Gitters.

Die diskreten Richtungen, die durch Vektoren mit Komponenten aus der Menge {-1;-1/2;0;1/2;1} mit mindestens einer Komponente gleich 1 oder -1 gebildet werden, sind dargestellt als gedachte Verbindungen des Koordinatenursprungs 14 mit Schnittpunkten eines Raumgitters 15.

Der durch benachbarte diskrete Raumrichtungen aufgespannte Raumwinkel 16 ist ebenfalls dargestellt.

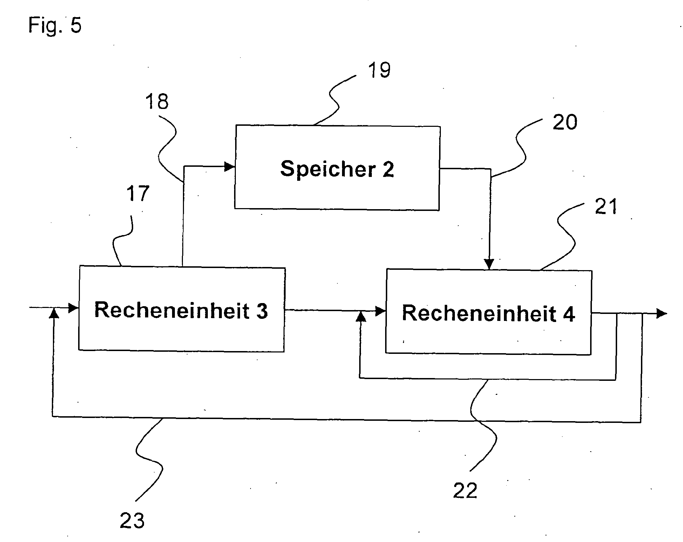

In Figur 5 ist schematisch der Ablauf der Bestimmung des Strahlungstransportes nach einer bevorzugten Ausführungsform des erfindungsgemässen Verfahrens dargestellt.

Hierbei verwendet das Verfahren einen Zyklus 23, der aus 1+n Iterationen gebildet wird.

In einer ersten Recheneinheit 17 wird für die erste Iteration für alle Stützpunkte des das Medium repräsentierenden numerischen Gitters und für eine Anzahl diskreter Raumrichtungen eine Strahlenverfolgung durchgeführt und unter Nutzung der gefundenen Strahlengänge das Integral der an dem jeweiligen Stützpunkt einfallenden Strahlungsintensität über den gesamten Raumwinkel ermittelt.

Für jeden Stützpunkt werden ausserdem für eine Anzahl von Teilraumwinkeln, die von einer reduzierten Anzahl diskreter Raumrichtungen aufgespannt werden, die Teilintegrale der an dem jeweiligen Stützpunkt einfallenden Strahlungsintensität, sowie der Verhältnisfaktor zwischen jedem Teilintegral und der Strahlungsintensität entlang der Richtung im Zentrum des Teilraumwinkels ermittelt.

Es erfolgt eine Speicherung 18 aller so ermittelten Verhältnisfaktoren in einem Speicher 19.

Vorzugsweise in einer zweiten Recheneinheit 21 wird für n weitere Iterationen 22 für alle Stützpunkte des numerischen Gitters und für die reduzierte Anzahl diskreter Raumrichtungen eine Strahlenverfolgung durchgeführt und unter Nutzung der gefundenen Strahlengänge das Integral der an dem jeweiligen Stützpunkt einfallenden Strahlungsintensität über den gesamten Raumwinkel als Summe aus Produkten der Strahlungsintensitäten in den diskreten Raumrichtungen mit den gespeicherten Verhältnisfaktoren 20 aus der ersten Iteration ermittelt.

Die Lehre der Erfindung umfasst ferner auch eine Vorrichtung zur Bestimmung der Verteilung der lokalen Strahlungsintensität, vorzugsweise in einem mindestens eine Grenzfläche aufweisenden, semitransparenten Medium, insbesondere zur Durchführung eines der vorstehend beschriebenen Verfahren, mit einer Einrichtung zur numerischen Darstellung einer Anzahl von Stützpunkten, die das Medium repräsentieren, einer Einrichtung zur numerischen Darstellung einer Anzahl diskreter Raumrichtungen, einer Einrichtung zur numerischen Durchführung einer Strahlenverfolgung, ausgehend von den Stützpunkten, entlang der ausgewählten diskreten Raumrichtungen, sowie einer Einrichtung zur numerischen Berechnung eines Strahlungstransportes auf der Grundlage einer festgelegten Rechenvorschrift und festgelegter Parameter unter Verwendung der durch Verfolgung der Strahlen gefundenen Strahlengänge einer Einrichtung zur Bestimmung eines Integrals der an jedem Stützpunkt aus den diskreten Raumrichtungen einfallenden Strahlungsintensität auf Grundlage einer festgelegten Rechenvorschrift und festgelegter Parameter.

Um ein signifikant schnelleres Verfahren mit gleichzeitig geringerem Speicherbedarf zur Bestimmung der Verteilung der lokalen Strahlungsintensität in einem semitransparenten, mindestens eine Grenzfläche aufweisenden Medium zu entwickeln, sieht die Erfindung bei einer bevorzugten Ausführungsform ein Ray-Tracing-Verfahren vor, mit den Schritten der Festlegung einer Anzahl von Stützpunkten, die numerisch darstellbar sind und die Grenzfläche des Mediums repräsentieren, der Verfolgung von Strahlen, ausgehend von den Stützpunkten auf der Grenzfläche, entlang ausgewählter diskreter Raumrichtungen unter Berücksichtigung zumindest einer Reflexion an der Grenzfläche, der Ermittlung der Werte der Strahlungsintensität in den diskreten Raumrichtungen für alle Stützpunkte auf der Grenzfläche durch numerisches Berechnen des Strahlungstransportes unter Nutzung der durch Strahlenverfolgung gefundenen Strahlengänge, der Speicherung der Werte der Strahlungsintensität in den diskreten Raumrichtungen für alle Stützpunkte auf der Grenzfläche, sowie der Verfolgung von Strahlen, ausgehend von den Stützpunkten im Innern des Mediums, entlang der ausgewählten diskreten Raumrichtungen bis zur Grenzfläche des Mediums.

### Bezugszeichenliste

- 1: Medium
- 2: Grenzfläche
- 3: Stützpunkt des numerischen Gitters auf der Grenzfläche
- 4: Reflexionen
- 5: Stützpunkt des numerischen Gitters im Innern des Mediums
- 6: Strahlenverfolgung bis zur Grenzfläche für Stützpunkt im Innern des Mediums ohne Berücksichtigung von Reflexionen
- 7: Recheneinheit 1
- 8: Speicherung der Ergebnisse von Recheneinheit 1
- 9: Speicher 1
- 10: Zugriff auf gespeicherte Ergebnisse von Recheneinheit 1
- 11: Recheneinheit 2
- 12: Wiederholung der Berechnung 2 für jeden Stützpunkt im Innern des Mediums
- 13: Wiederholung der Berechnung 1 für jeden Stützpunkt auf der Grenzfläche des Mediums
- 14: Position des betrachteten Stützpunktes des numerischen Gitters, gleichzeitig Koordinatenursprung
- 15: Veranschaulichung der 98 diskreten Richtungen
- 16: Durch benachbarte diskrete Richtungen aufgespannter Raumwinkel
- 17: Recheneinheit 3
- 18: Speicherung der Ergebnisse von Recheneinheit 3
- 19: Speicher 2
- 20: Zugriff auf gespeicherte Ergebnisse von Recheneinheit 3
- 21: Recheneinheit 4
- 22: Wiederholung der Berechnung mit 6 diskreten Richtungen für n Iterationen
- 23: Wiederholung des Zyklus mit 1 + n Iterationen für jeden Stützpunkt des numerischen Gitters

## Patentansprüche

1. Verfahren zur Bestimmung der Verteilung der lokalen Strahlungsintensität in einem mindestens eine, vorzugsweise geschlossene, Grenzfläche (2) aufweisenden, semitransparenten Medium (1), umfassend
die Festlegung einer ersten Anzahl von Stützpunkten (3) auf der mindestens einen, vorzugsweise geschlossenen, Grenzfläche (2),
die Auswahl einer Anzahl diskreter Raumrichtungen für diese Stützpunkte,
die Berechnung des Strahlungstransportes zu den Stützpunkten (3) auf der mindestens einen, vorzugsweise geschlossenen, Grenzfläche (2), vorzugsweise mit den Mitteln der Strahlenverfolgung, unter Berücksichtigung einer Anzahl von n Reflexionen (4), wobei n eine natürliche Zahl grösser als Null ist,
die Festlegung einer zweiten Anzahl von Stützpunkten (5) innerhalb des Mediums (1), die Berechnung des Strahlungstransportes von ausgewählten, vorzugsweise von allen, aus der Anzahl von Stützpunkten (3) auf der mindestens einen, vorzugsweise geschlossenen, Grenzfläche (2) zu ausgewählten, vorzugsweise allen Stützpunkten (5) innerhalb des Mediums (1).

2. Verfahren zur Bestimmung der Verteilung der lokalen Strahlungsintensität in einem mindestens eine, vorzugsweise geschlossene Grenzfläche (2) aufweisenden, semitransparenten Medium (1), umfassend
- die Festlegung einer Anzahl von Stützpunkten (5), die das Medium (1) repräsentieren,
- die Auswahl einer Anzahl diskreter Raumrichtungen,
- die Verfolgung von Strahlen, ausgehend von den Stützpunkten (5), entlang der ausgewählten diskreten Raumrichtungen,
- das Berechnen des Strahlungstransportes unter Verwendung der durch Verfolgung der Strahlen gefundenen Strahlengänge,
- die Ermittlung des Integrals der an jedem Stützpunkt (5) einfallenden Strahlungsintensität, insbesondere nach Anspruch 1,
bei welchem
das Verfahren für zumindest zwei Iterationen, jeweils für alle Stützpunkte (5), durchgeführt wird und sich die Anzahl der ausgewählten diskreten Richtungen, entlang derer eine Strahlenverfolgung durchgeführt wird, für zumindest zwei Iterationen unterscheidet.

3. Verfahren nach Anspruch 2, bei welchem das Verfahren für zumindest m + n Iterationen durchgeführt wird, wobei m und n natürliche Zahlen grösser als Null sind, jeweils für alle Stützpunkte, umfassend die Schritte in den m Iterationen
- einer Strahlenverfolgung für eine Anzahl M ausgewählter diskreter Richtungen, wobei M eine natürliche Zahl grösser als Null ist,
- einer Ermittlung des Integrals der an jedem Stützpunkt einfallenden Strahlungsintensität über den gesamten Raumwinkel unter Nutzung der M gefundenen Strahlengänge, sowie
- der Ermittlung von N Verhältnisfaktoren aus dem Verhältnis der Strahlungsintensität in N ausgewählten diskreten Richtungen und N zugehörigen Teilintegralen, wobei N eine natürliche Zahl grösser Null ist, die N diskreten Richtungen eine Untermenge der M diskreten Richtungen sind, wobei die N Teilintegrale über N Teilraumwinkel ermittelt werden mit den N diskreten Richtungen jeweils im Zentrum der N Teilraumwinkel, und zur Ermittlung der N Teilintegrale die M gefundenen Strahlengänge genutzt werden, und umfassend die Schritte in den n Iterationen
- der Strahlenverfolgung entlang der N ausgewählten diskreten Richtungen und
- der Ermittlung des Integrals über den gesamten Raumwinkel unter Nutzung der in den m Iterationen ermittelten Verhältnisfaktoren.

4. Verfahren nach Anspruch 3, bei welchem m gleich 1 ist.

5. Verfahren nach einem der Ansprüche 3 oder 4, bei welchem die M Richtungen durch dreidimensionale Vektoren in einem rechtwinkligen Koordinatensystem mit Komponenten aus der Menge {-1;-1/2;0;1/2;1} mit mindestens einer Komponente gleich 1 oder -1 gebildet werden.

6. Verfahren nach einem der Ansprüche 3 bis 5, bei welchem die N Richtungen durch dreidimensionale Vektoren in einem kartesischen Koordinatensystem mit genau einer Komponente gleich 1 oder -1 und den anderen Komponenten gleich Null gebildet werden.

7. Verfahren nach einem der Ansprüche 3 bis 6, bei welchem die N Richtungen durch zyklisches Vertauschen bei aufeinander folgenden Iterationen geändert werden.

8. Verfahren nach einem der Ansprüche 1 bis 6, bei welchem die Stützpunkte (5) im Innern des Mediums (1) derart gewählt werden, dass diese ein rechtwinkliges und äquidistantes Gitter bilden.

9. Verfahren nach einem der Ansprüche 1 bis 8, bei welchem die in den Stützpunkten einfallende Strahlungsintensität auf eine zweite Anzahl von Stützpunkten interpoliert wird.

10. Verfahren nach einem der Ansprüche 1 bis 9, bei welchem die Strahlungsintensitäten an den Stützpunkten aus einer Temperaturverteilung des Mediums ermittelt werden und diese als Eingabeparameter für das Verfahren verwendet werden.

11. Verfahren nach einem der Ansprüche 1 bis 10, umfassend den Schritt der Ermittlung einer Temperaturverteilung des Mediums auf der Grundlage der gefundenen Strahlungsintensitäten an den Stützpunkten.

12. Verfahren nach einem der Ansprüche 1 bis 11, bei welchem die zur numerischen Berechnung eines Strahlungstransportes erforderlichen Parameter und die Rechenvorschrift für unterschiedliche Frequenzbereiche der Strahlung unterschiedlich festgelegt werden.

13. Verfahren zur Berechnung der Temperaturverteilung in einer glastechnischen Einrichtung umfassend ein Verfahren nach einem der Ansprüche von 1 bis 12.

14. Verfahren nach Anspruch 13, bei welchem die glastechnische Einrichtung eine Glas-Schmelzeinrichtung, eine Glas-Läutereinrichtung und/oder eine Glas-Konditionierungseinrichtung ist.

15. Verfahren nach Anspruch 13, bei welchem die glastechnische Einrichtung eine heissformgebende Einrichtung ist.

16. Verfahren nach einem der Ansprüche von 12 bis 15, bei welchem eine Höchsttemperatur des glastechnischen semitransparenten Materials nicht überschritten wird.

17. Verfahren nach einem der vorstehenden Ansprüche, bei welchem die Festlegung von zur Bestimmung eines Integrals der an einem Punkt entlang mindestens einer diskreten Raumrichtung einfallenden Strahlungsintensität erforderlichen Rechenvorschriften und Parameter gegeben ist durch die Strahlungstransportgleichung.

18. Computerprogrammprodukt umfassend einen Datenträger mit einem Computerprogramm zur Durchführung eines Verfahrens nach einem der vorstehenden Ansprüche von 1 bis 17.

19. Vorrichtung zur Bestimmung der Verteilung der lokalen Strahlungsintensität, vorzugsweise in einem mindestens eine Grenzfläche aufweisenden, semitransparenten Medium, insbesondere zur Durchführung eines Verfahrens nach einem der Ansprüche 1 bis 17 umfassend,
- eine Einrichtung zur numerischen Darstellung einer Anzahl von Stützpunkten, die das Medium repräsentieren,
- eine Einrichtung zur numerischen Darstellung einer Anzahl diskreter Raumrichtungen,
- eine Einrichtung zur numerischen Durchführung einer Strahlenverfolgung, ausgehend von den Stützpunkten, entlang der ausgewählten diskreten Raumrichtungen, sowie
- eine Einrichtung zur numerischen Berechnung eines Strahlungstransportes auf der Grundlage einer festgelegten Rechenvorschrift und festgelegter Parameter unter Verwendung der durch Verfolgung der Strahlen gefundenen Strahlengänge
- eine Einrichtung zur Bestimmung eines Integrals der an jedem Stützpunkt aus den diskreten Raumrichtungen einfallenden Strahlungsintensität auf Grundlage einer festgelegten Rechenvorschrift und festgelegter Parameter.
